Europäisches Patentamt

European Patent Office

Office européen des brevets

(11) Publication number: **0 273 967 B1**

# EUROPEAN PATENT SPECIFICATION

(45) Date of publication of patent specification: **25.11.92**   (51) Int. Cl.⁵: **H04N 7/087**, H04N 11/00

(21) Application number: **87904702.5**

(22) Date of filing: **15.07.87**

(86) International application number:
**PCT/GB87/00499**

(87) International publication number:
**WO 88/00783 (28.01.88 88/03)**

(54) **IMPROVEMENTS RELATING TO TELEVISION.**

(30) Priority: **16.07.86 GB 8617320**
 **11.09.86 GB 8621893**
 **23.12.86 PCT/GB86/00799**
 **13.02.87 GB 8703298**

(43) Date of publication of application:
 **13.07.88 Bulletin 88/28**

(45) Publication of the grant of the patent:
 **25.11.92 Bulletin 92/48**

(84) Designated Contracting States:
 **DE FR NL**

(56) References cited:
 **EP-A- 0 174 056**
 **US-A- 3 715 483**

 **Globecom '85, IEEE Global Telecommunications Conference, New Orleans, Louisiana, 2-5 December 1985, vol 1 of 3, IEEE, (US), T. Fukinuki et al.: "NTSC-full-compatible extended-definition TV. Proto Model and motion adaptive processing", pages 4.6.1. -**

**4.6.5.**

**NHK Laboratories Note, no. 304, September 1984, NHK, (Tokyo, JP) Y.Ninomiya et al.: " A single channel HDTV broadcast system-the muse", pages 1-12**

(73) Proprietor: **BRITISH BROADCASTING CORPORATION**
 **Broadcasting House**
 **London W1A 1AA(GB)**

(72) Inventor: **CHILDS, Ian**
 **26 Aultone Way**
 **Sutton, Surrey(GB)**
 Inventor: **CLARKE, Christopher, Keith, Perry**
 **3 The Stumblets Pound Hill**
 **Crawley West Sussex RH10 4TR(GB)**

(74) Representative: **Abnett, Richard Charles et al**
 **REDDIE & GROSE 16 Theobalds Road**
 **London WC1X 8PL(GB)**

## Description

This Invention concerns improvements in conventional television signals, by which we mean signals of the type comprising PAL, NTSC and SECAM broadcast television signals as currently used for terrestial broadcasting and the proposed MAC based signals, and in transmitters and receivers for such signals.

There has been much discussion over the past few years of possible new standards for satellite-based broadcasting systems and high-definition television systems, involving radical departures from the conventional television signals currently in use. We have proposed in the context of such discussions using digital assistance information to assist signal processing in the receiver to produce a higher quality displayed picture on the receiver cathode ray tube (CRT).

A paper entitled 'NTSC-full-compatible extended-definition TV-Proto model and motion adaptive processing' read at the Globecom 1985, IEEE Global Telecommunications conference, New Orleans, Louisiana, U.S.A. and published by IEEE in Volume 1 of the conference record discloses a system in which digital assistance information is used in the form of an indication transmitted with the video data as to the degree of movement (if any) present in a scene.

NHK laboratories note, number 304, of September 1984 entitled 'A single channel HDTV broadcast system - the muse' by Y. Ninomiya et al. discloses a system which motion adaptive bandwidth reduction is used. A movement detector in the receiver detects whether received video data relates to a stationary scene and decodes the data in an appropriate decoding branch. In the case of camera pan or tilt a motion vector is transmitted with the video data for the whole scene which instructs the receiver to decode the panned/tilted scene as if it was stationary.

This system has the disadvantage of being receiver based and so receivers must be equipped with expensive motion detectors which adds greatly to the unit cost of the receiver. This clearly is undesirable.

Digital assistance information has been used in US-A-4,605,963 which relates to the transmission of digital TV signals. The system reduces the data rate by transmitting only half the transmitted samples. Steering data is transmitted with the signal to indicate which of the transmitted data surrounding a given data item is the closest match to the untransmitted data so that an appropriate reconstruction may be made. The system is inapplicable to frequency multiplexed signals.

We have, however, appreciated that for the foreseeable future the great majority of receivers are likely to continue to receive conventional terrestial uhf transmissions and that an improvement in the quality of display of conventional television signals will be of real value.

The invention is defined in the appended claims to which reference should now be made.

The invention will be described by way of example with reference to the PAL system. In accordance with this invention additional data is transmitted during the field blanking interval, which comprises a plurality of bits or multi-bit words each representing picture-dependent information such as whether movement has occurred in a related respective part of the picture being transmitted. That is, the picture is notionally divided into blocks of say 5 to 20 lines high and 5 to 20 pixels wide, the blocks preferably being diamond shaped. At the transmitter a determination is made in relation to each block as to whether it contains moving information or essentially stationary information. If moving, it may be possible to code that it is moving with one of one or more predetermined movement vectors (amplitude/direction combination).

The sizes of the individual picture areas will be a matter for choice depending on the capacity of the vertical blanking interval but there will normally be well in excess of 1000 such areas in one picture.

The information can be used at the receiver significantly to improve the quality of the displayed picture. Two examples will be considered.

First the information can be used to reduce cross-colour and cross-luminance effects. This is achieved by using picture-delay decoding in stationary areas of the picture and switching to line-delay decoding in moving areas. Thus stationary areas of the picture have a full 5.5 MHz un-notched resolution but the resolution of moving areas would fall to around 3.5 MHz (typical of present-day receivers). Where movement with one of the defined movement vectors is assumed to have taken place, the picture can be treated as though stationary but with due allowance made for the movement vector in comparing the two fields. The full definition of the vectors can also be transmitted in the field blanking interval. The picture could be divided into a number of large regions and different vectors used for the different regions, nine such regions might be used on a 3 by 3 array.

A second possibility is to use the movement information to assist display up-conversion, that is upgrading the 625 line interlaced signal to a higher line standard.

The method destroys much of the synchronising information currently transmitted in the vertical blanking interval. However, most modern receivers rely very little on the transmitted field synchronisation and blanking signals. Integrated circuits (IC's) count the line synchronisation signals to determine the start of field flyback, and apply fixed blanking levels to the display CRT. The field flyback signals so produced are compared with the received field synchronisation information and the field timebase is reset only if they are significantly in error (such as might happen after a non-sync cut, for example). Thus much of the complexity of the present field synchronisation interval is no longer required.

The use of the field blanking interval is, of course, well known for Teletext purposes. However, the data rate used in Teletext is very low (only 16 kbits/sec for each line of data), and the use of data items in the field blanking interval to control signal processing at the receiver on a corresponding area by area basis has not previously been considered.

The preferred example of the invention will now be described in more detail with reference to the drawings in which:-

Figure 1 is a waveform diagram illustrating the existing field synchronising pulses at the start of even and odd fields;

Figure 2 is a corresponding diagram showing one possible modification in accordance with this invention to free time for digital assistance information;

Figure 3 is a block schematic circuit diagram of a movement adaptive decoder for use in a receiver and using a movement threshold signal from incoming vector information;

Figure 4 is a block schematic circuit diagram illustrating movement compensation using phase shifters to preserve the subcarrier phase relationships of the movement compensated contributions;

Figure 5 is a block schematic circuit diagram illustrating a movement compensating decoder using a picture-based filter for still pictures and a line-based decoder followed by a movement-compensated picture-delay filter for moving areas; and

Figure 6 is a block schematic circuit diagram of a digitally-assisted upconverter for use in a receiver embodying the invention.

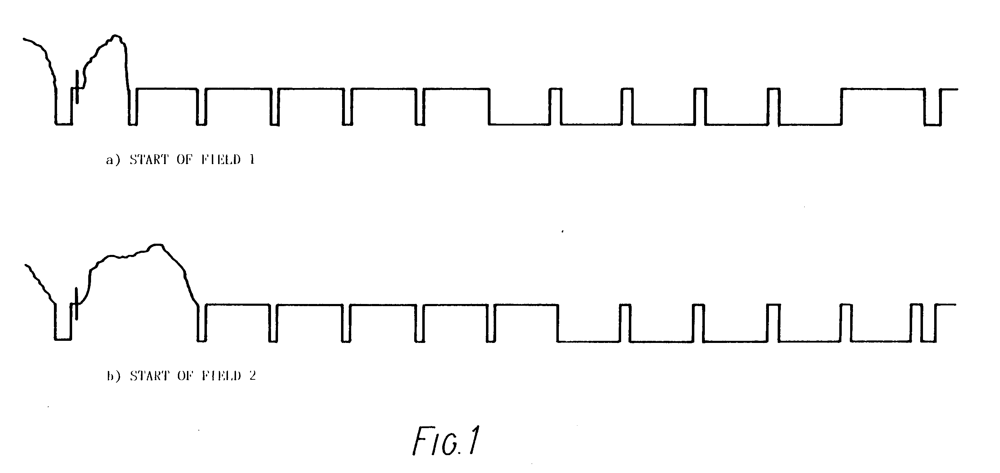

Figure 1 shows in the context of a PAL System I signal the contents of the field synchronisation signals during odd and even fields, fields 1 and 2. Five broad pulses are used to identify the start of field flyback, in order to give immunity to noise and impulsive interference and in order to allow them to be easily distinguished from the line synchronisation pulses. They are preceded by five equalising pulses, whose purpose is to equalise the signal level between odd and even fields at the receiver sync detector prior to the arrival of the broad pulses, and hence to ensure a good interlace performance. The remainder of the field interval is occupied by blank lines, by lines containing Teletext information, and by insertion test signals. The total duration of the field interval is 25 lines, or 1.6 msec.

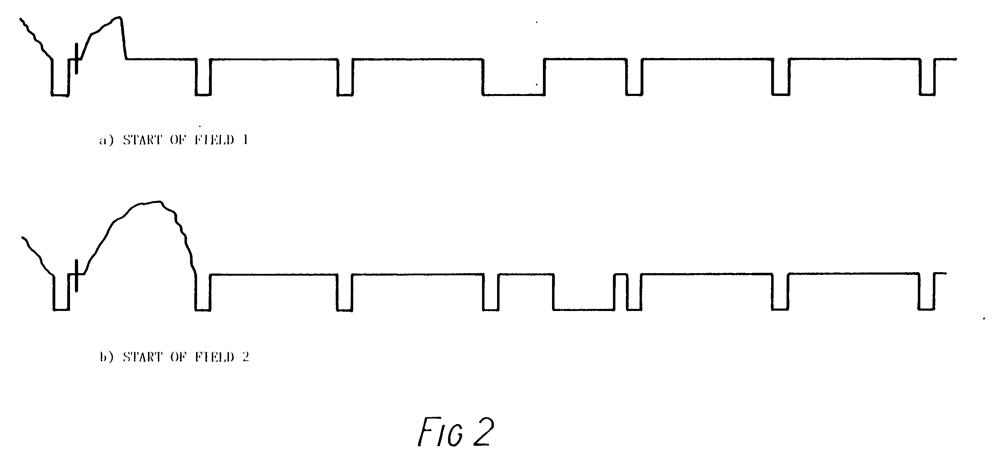

Figure 2 shows one way in which the field synchronisation information signals might be simplified to take account of the advances in receiver design. Only one broad pulse is used since the line counting circuits of modern IC's provide quite sufficient protection against noise and interference. Similarly, the equalising pulses have been omitted, since quality of interlace is no longer dependent on the quality with which the field pulses are received. Only one line is therefore used per field, instead of the five that are required at present.

A further saving is made by reducing the allocation for insertion test signals. By taking advantage of modern technology, all the test signals presently transmitted may be time-multiplexed onto only one line per field. If eight of the remaining lines are used for Teletext signals, there are sixteen spare lines which may be used to carry DATV data. The synchronisation performance of most existing receivers would be unaffected although, of course, only later generations of receivers would be equipped to decode the additional information.

If these lines were to be formatted in the same way as for Teletext, then the total data capacity would be 256 kbits/sec. However, further extension in capacity would be possible by using a multi-level data signal; for example, use of a four-level signal would allow the capacity to be doubled to 512 kbit/sec. Such a multi-level signal has not been considered for present day Teletext applications because of the difficulties that would be caused by ghosting. Future receivers, including the necessary circuits to decode the DATV information, could also include circuits to cancel any ghosts, however. Many suitable techniques for achieving ghost cancellation have been reported and, as an additional benefit, these would also improve the quality of the received PAL signal. Some techniques require the transmission of a suitable training signal for calibration purposes; such a training signal could be included in the sequence of signals transmitted during the insertion test line.

The additional digital movement information, which we term digital assistance data or DATV data, is used to indicate the type of movement present in the television picture. For example, the picture could be split into a number of small, diamond-shaped blocks, as suggested in our earlier International Patent Application WO-A-87/04034. If these blocks were 12 lines high and 12 samples wide, then there would be a total of 5675 blocks in a single television picture. If three bits of digital assistance information were allocated to each block, and if each block were updated every pair of television fields, then the data capacity required for the digital assistance data would be just less than 426 kbits/sec. This would easily be accommodated by the four-level transmission method outlined above.

The three bits allocated to each block would allow eight different motion conditions to be expressed. These conditions could be "stationary", "moving with vector 1", "moving with vector 2", "moving with vector 3" ....... "moving with vector 6" and "moving but not with any of vectors 1 to 6". The values of vectors 1 to 6 would also be transmitted once per field. Assuming that each vector was adequately expressed with a pair of eight-bit digital numbers (one for the horizontal component of velocity and one for the vertical component), the additional capacity required would be only 2.4 kbit/sec.

As a second example, the transmission method could be extended to cater for five coding levels, resulting in a data capacity of 640 kbits/sec. This would allow the use of four bits instead of three per block, and hence the use of fourteen rather than only six motion vectors. Alternatively, the number of bits allocated to each block could be decreased to two (two motion vectors only) and either the size of the diamond-shaped blocks decreased to 8 lines high by 8 lines samples wide or else each block updated every field rather than only every other field. In all cases, the values of the motion vectors could be measured as described in our earlier International Patent Application WO-A-87/04034.

This information on the motion content of the scene can now be used to improve the performance of the PAL decoder in the receiver. A conventional coder for PAL signals combines the luminance and chrominance components together without any filtering of the luminance signal. Therefore, as the two signals share the same spectrum space, the decoder can interpret the signals incorrectly, resulting in the impairments known as cross-colour and cross-luminance. These impairments are reduced in the decoder by the use of a luminance notch and by the PAL delay line, but a loss of static resolution is incurred.

Improved separation of luminance and chrominance can be achieved using comb filters, both reducing cross-effects and retaining more resolution. In particular, by using a comb filter based on delays of one picture period (40ms for a 50 field per second standard), substantially perfect decoding of still pictures can be achieved, giving full resolution and no cross-effects. However, cross-effects return in moving areas and the picture delays cause significant blurring of movement. For these areas, the use of a different technique, such as a line delay-based filter, would result in better performance. While adaptive techniques that choose the most appropriate method for each part of the picture have been attempted, the simple methods of movement detection that could be applied in practical circumstances in a receiver have proved insufficiently accurate to achieve reliable performance.

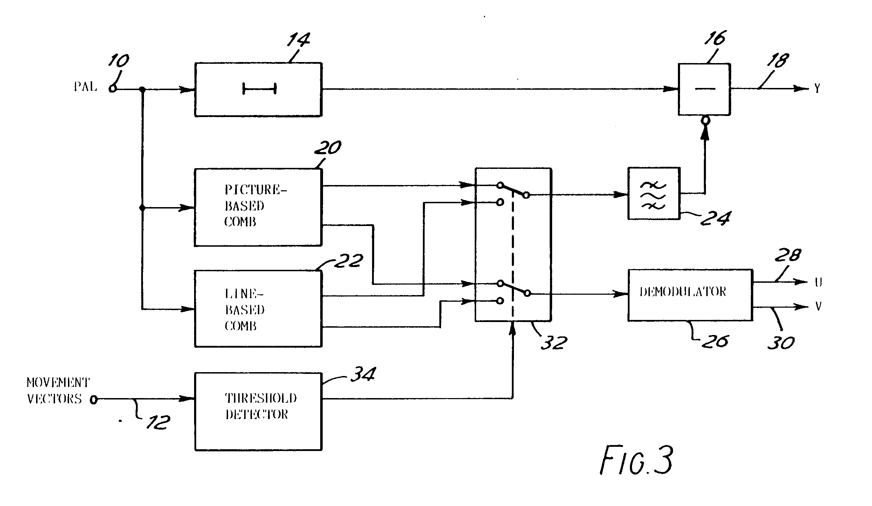

If the composite PAL signal contains accurate digitally-encoded movement vector information derived at the source, this can be used to assist the operation of the decoder in a number of ways. In its simplest form, movement vectors above a suitably chosen threshold can be used to select the line-based decoder on an area-by-area basis. The main elements of such a decoder are shown in Figure 3. While this would avoid the impairments of the picture delay method in moving areas, a large difference in the levels of cross-effects would remain between the still and moving areas.

In the circuit of Figure 3 a PAL signal is received at an input 10 and a motion vector signal at an input 12. The motion vector signal is transmitted in the vertical blanking interval of the transmitted PAL signal and is separated by a circuit based on a conventional sync separator. The PAL signal is applied through a compensating delay 14 to the non-inverting input of a subtractor 16 which provides a luminance signal Y at an output 18. The PAL signal is also applied to a picture-based comb filter 20 and a line-based comb filter 22. The output of one of these filters is applied through a band-pass filter 24 to the subtractive input of the subtractor 16 and the output of the other filter is applied to a demodulator 26 which produces U and V outputs 28 and 30. The selection of which filter output is applied to which of the filter 24 and demodulator 26 is achieved by a cross-over switch 32. This has a control input which receives the output of a threshold detector 34 which receives the motion vector signal from input 12.

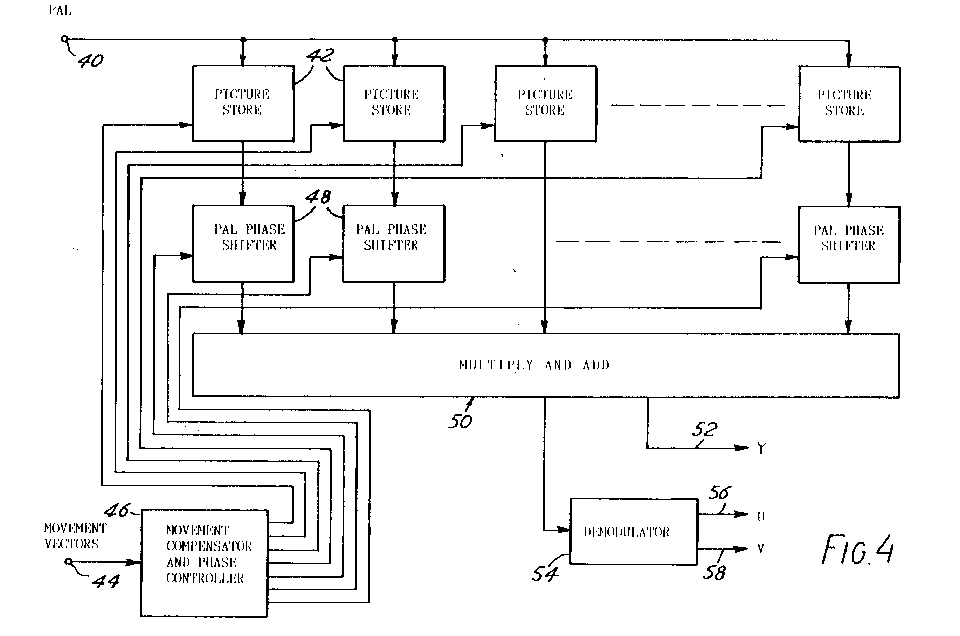

A better method would be to use the transmitted movement vector information in the decoder actually to compensate for the movement of individual areas. This would be achieved by dynamically varying each picture delay unit from its nominal value according to the horizontal and vertical components of the movement vector. Whereas in a movement compensator working on separate component signals such an operation would exactly superimpose the contributions from a number of frames, effectively negating the motion, this is not possible with a PAL-encoded signal because of the need to preserve the subcarrier phase relationships of the individual contributions. One method therefore would be to move the contributions to the nearest position in which the phase relationship would be compatible. This is not preferred, however, because of the rather coarse quantising of position that would result. This can be avoided as shown in Figure 4 by appropriately phase shifting the contributions to maintain the original subcarrier phase even though the position has altered. The phase correction would have the effect of introducing aliasing in the luminance output and would cause a degree of cross-colour due to the difference in position of luminance detail of the movement compensated frames.

Thus, in Figure 4 the PAL input 40 is coupled to several picture stores 42. The movement vector input 44 is connected to a movement compensator and phase controller 46. This controls not only the reading from the picture stores 42 but also the operation of a series of corresponding PAL phase shifters 48, the outputs of which are combined in a multiplying and adding circuit 50 which. provides a luminance signal Y at an output 52 and supplies a demodulator 54 which supplies U and V outputs 56 and 58.

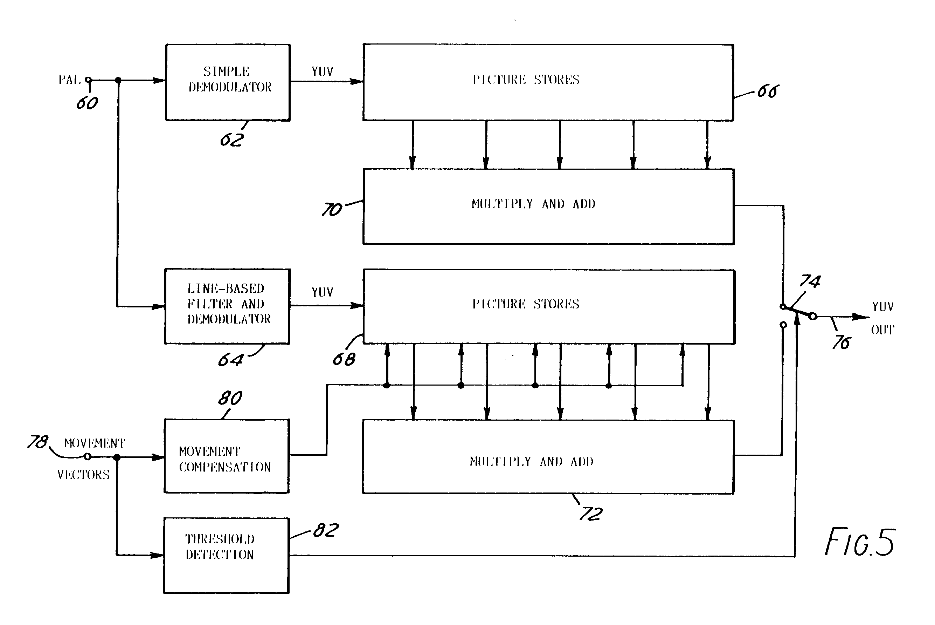

A more advanced system that would further improve performance could be based once again on picture delay decoding if the movement vectors were below a threshold and on a combination of line-based decoding and movement compensation for moving areas. The movement method would consist of decoding the signal using a line-based luminance-chrominance separator followed by a demodulator. Such a decoder can maintain the full horizontal bandwidth of the input signal at the expense of diagonal luminance detail. Other impairments would arise as cross-luminance on vertical chrominance transitions and cross-colour from diagonal luminance. Then, however, if the decoded contributions from several fields were combined together after movement compensation, the residual impairments would be further suppressed. The outline of such a system is shown in Figure 5.

In Figure 5, the PAL signal at input 60 is applied to a simple demodulator 62 and to a line-based filter and demodulator 64. Each demodulator supplies YUV signals to respective picture stores 66,68 with which are associated multiply-and-add circuits 70,72. The output of one of circuits 70,72 is selected by a switch 74 to provide a YUV output 76. The movement vector input 78 is applied through a movement compensation circuit 80 to the picture stores 68 and by means of a threshold detector circuit 82 controls switch 74.

A second way in which the motion information might be used would be to assist any display upconversion. Such upconversion would be used in order to eliminate artefacts caused by the basic structure of the 625-line, interlaced raster, see BBC Research Department Report No. 1983/8, Roberts A. Previous work has demonstrated that, for the ideal performance of this upconversion to be achieved, it must be carried out in a motion-adaptive fashion. Unfortunately, it is extremely difficult to ensure reliable detection of motion in a receiver unless additional information is available, see BBC Research Department Report No. 1985/5, Roberts A. Such additional information could be provided by the digital assistance data.

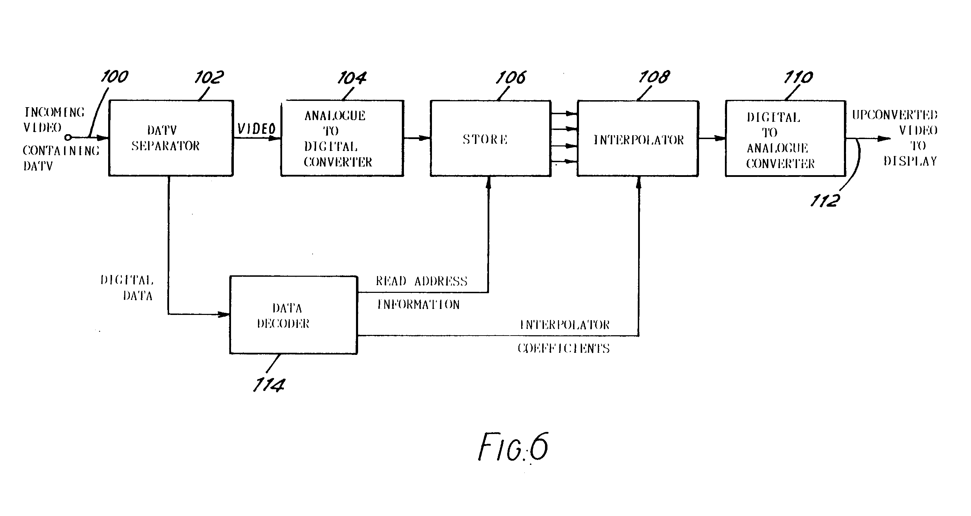

Figure 6 shows equipment that could be used to realise upconversion, controlled by the incoming DATV data. An incoming video signal at an input 100 is applied to a DATV separator 102 much like a sync separator, as previously mentioned. The video path includes an analogue-to-digital converter 104, a large store 106, an interpolator 108 and a digital-to-analogue converter 110 providing upconverted video at an output 112 for applying to a display. The digital data separated by separator 102 is applied to a decoder 114 which provides two outputs. One produces read addresses for the store 106 and the other provides interpolator coefficients for the interpolator 108.

Thus the incoming video signal is written into the store 106. The exact capacity of this store would depend on the algorithms used in later stages of the equipment, but would typically be in the region of one picture. The output of the store is fed to the interpolator 108, which standards-converts the signal to a higher line and/or field rate for display. The interpolator is capable of operating in two modes. In stationary areas of the picture, the displayed information is interpolated from lines of both incoming fields (field 1 and field 2); thus these areas of the picture are portrayed at maximum resolution. In moving areas of the picture, the displayed signal is taken from one incoming field only (the most recent field); this ensures that multiple images on moving objects are minimised. In smoothly-moving areas, the picture store addresses and interpolation parameters are adjusted to compensate for any displacement between fields 1 and 2. Thus, in those areas information from both fields can be employed and hence the resolution increased to match that of stationary areas.

Thus in the examples described additional data is carried in the field blanking interval in such a way as to correspond to respective areas of the picture. This information then is sufficient for the receiver to produce a display of improved quality without the need for a separate control data channel.

All the improvements described and illustrated could be introduced in an essentially compatible way. The content of the PAL video signal would be unaffected and it would only be necessary to ensure that the modifications to the field synchronising signal, and the presence of additional data in the field blanking interval, did not cause impairments to current generations of receivers. However the improvements described may also be useful in systems other than the conventional PAL, NTSC and SECAM systems, such as the proposed MAC based systems.

**Claims**

1. A conventional television signal, modified in that the vertical blanking interval includes a plurality of items of additional data, characterised in that each data item represents picture-dependent information as to assumed movement of an image from a related respective area of the picture being transmitted.

2. A signal according to Claim 1, in which the picture-dependent information indicates that the image in the picture area is stationary, is moving with one of one or more predetermined vectors, or is otherwise moving.

3. A signal according to Claim 2, in which the field blanking interval also contains data defining the one or more predetermined vectors.

4. A signal according to Claim 2 or 3, in which the one or more predetermined vectors are differently defined for different regions of the picture.

5. A signal according to any predetermined claim, in which there are at least 1000 of the said areas in each picture.

6. A broadcast PAL, NTSC, SECAM based television transmitter including means for receiving a video signal, means for generating from the video signal a digital assistance signal comprising a plurality of items of data, and means for inserting the digital assistance signal into the field blanking interval of the video signal, characterised in that each data item generated represents picture-dependent information as to assumed movement of an image from a related respective area of the picture carried by the video signal.

7. A broadcast PAL, NTSC, SECAM or MAC based television receiver, including means for receiving and demodulating a received television signal (26; 62, 64), video processing circuitry (66, 68, 80; 104, 106, 108) for processing the video component of the received signal for application to the receiver display, separator means for separating from the signal additional information carried in the vertical blanking interval of the video signal, and means (32) for applying the separated information to the video processing circuitry to improve the quality of the display, characterised in that the additional information comprises a plurality of items of additional data each representing picture-dependent information as to assumed movement of an image from a related respective area of the picture being transmitted.

8. A receiver according to Claim 7, in which the additional data controls the nature of the decoding of the video signal.

9. A receiver according to Claim 7, in which the additional data contains information as to an assumed movement of an image in the picture area related to the data item and is used to control the nature of interpolation used in up-conversion of the signal to a higher line and/or field standard for the display.

10. A receiver according to Claim 8 and further comprising a picture-based filter means (20), a line-based filter means (22), and control means (32) for selecting one of said filter means in response to the additional data to determine which of said filter means is to be used for processing the video component of the received signal for the related area of the picture to be displayed.

11. A receiver according to Claim 10, wherein the picture-based filter means (20) and the line-based filter means (22) each comprise a comb-filter.

12. A receiver according to any of Claims 7 to 11, wherein the video processing circuitry comprises a plurality of picture stores (42) each storing one of a plurality of pictures and having a phase shifting means (48) for shifting the phase of the contents of the picture stored therein, the means for applying the separated information comprising a movement compensation and phase control means (46) arranged to cause the phase shifting means of a picture store to phase shift the contents of the picture stored therein in accordance with the degree of movement of each said area of the picture represented by the data items of additional data related to said area.

13. A receiver according to Claim 8, wherein the means for demodulating a received television signal comprises first and second demodulators (62, 64), the second demodulator (64) having a line-based separation filter associated therewith for separating the luminance and chrominance components of the received signal prior to demodulation, wherein the video processing circuitry includes first and second picture storage means (66, 68) associated respectively with the first and second demodulator means, the means for applying the separated information comprising movement compensation means (80) arranged to modify the contents of the second picture storage means in dependence on the additional items of data received for the related area of the picture to be displayed, and a selector (74) for selecting between the video component demodulated by the first demodulator means and the video component demodulated by the second demodulator means.

14. A receiver according to Claim 9, wherein the video processing circuitry comprises an analogue to digital convertor (104) a store (106) for storing digital video components, an interpolator (108) for up-converting a video component to a higher line and/or field rate for display, the interpolator interpolating the converted video component as a stationary or moving area in dependence on related additional data related to the area of the picture supplied to the interpolation means, and a digital-to-analogue convertor (110) to convert the up-converted video component to an analogue signal for display.

15. A method of transmitting a television signal, comprising the steps of generating a video signal, generating from the video signal a digital assistance signal, inserting the digital assistance signal into the field blanking interval of the video signal, characterised in that the digital assistance signal generated comprises a plurality of items of data, each representing picture-dependent information as to assumed movement of an image from a related respective area of the picture carried by the video signal.

**Patentansprüche**

1. Konventionelles Fernsehsignal, dadurch modifiziert, daß das Vertikalaustastintervall mehrere Elemente zusätzlicher Daten enthält,
**dadurch gekennzeichnet**,
daß jedes Datenelement bildabhängige Information betreffend angenommener Bewegung eines Bildes von einem betreffenden, jeweiligen Bereich des Bildes, das übertragen wird, repräsentiert.

2. Signal nach Anspruch 1, in welchem die bildabhängige Information anzeigt, daß das Bild im Bildbereich stationär ist, sich mit einem von einem oder mehreren vorbestimmten Vektoren bewegt oder sich andersartig bewegt.

3. Signal nach Anspruch 2, in welchem das Vertikalaustastintervall auch Daten enthält, die den einen oder die mehreren vorbestimmten Vektoren definieren.

4. Signal nach Anspruch 2 oder 3, in welchem der eine oder die mehreren vorbestimmten Vektoren für unterschiedliche Regionen des Bildes verschieden definiert sind.

5. Signal nach einem vorhergehenden Anspruch, in welchem zumindest 1000 dieser Bereiche in jedem Bild vorliegen.

6. Rundfunk-Fernsehsender auf PAL, NTSC, SECAM-Basis, aufweisend eine Einrichtung zum Empfang eines Videosignals, eine Einrichtung zum Erzeugen eines mehrere Datenelemente aufweisenden digitalen Hilfssignals aus dem Videosignal, und eine Einrichtung zum Einfügen des digitalen Hilfssignals in das Vertikalaustastintervall des Videosignals,
**dadurch gekennzeichnet**,
daß jedes erzeugte Datenelement bildabhängige Information betreffend angenommener Bewegung eines Bildes von einem betreffenden, jeweiligen Bereich des Bildes, das vom Videosignal übertragen wird, repräsentiert.

7. Rundfunk-Fernsehempfänger auf PAL, NTSC, SECAM oder MAC-Basis, aufweisend eine Einrichtung zum Empfangen und Demodulieren eines empfangenen Fernsehsignals (26; 62, 64), eine Videoverarbeitungsschaltung (66, 68, 80; 104, 106, 108), die die Videokomponente des empfangenen Signals für die Übergabe an die Empfängerdarstelleinheit verarbeitet, eine Trenneinrichtung, die vom Signal zusätzliche Information abtrennt, die im Vertikalaustastintervall des Videosignals übertragen wird, und eine Einrichtung (32), die die abgetrennte Information der Videoverarbeitungsschaltung zuführt, um die Qualität der Darstellung zu verbessern,
**dadurch gekennzeichnet**,
daß die zusätzliche Information mehrere Elemente zusätzlicher Daten umfaßt, die jeweils bildabhängige Information betreffend angenommener Bewegung eines Bildes von einem betreffenden, jeweiligen Bereich des Bildes, das übertragen wird, repräsentiert.

8. Empfänger nach Anspruch 7, in welchem die zusätzlichen Daten die Art der Decodierung des Videosignals steuern.

9. Empfänger nach Anspruch 7, in welchem die zusätzliche Date Information betreffend einer angenommenen Bewegung eines Bildes im Bildbereich enthält, der auf das Datenelement bezogen ist, und dazu verwendet wird, die Art von Interpolation zu steuern, die bei einer Aufwärtsumsetzung des Signals auf einen höheren Zeilen- und/oder Teilbildstandard für die Darstellung verwendet wird.

10. Empfänger nach Anspruch 8 und ferner aufweisend eine Filtereinrichtung (20) auf Bildbasis, eine Filtereinrichtung (22) auf Zeilenbasis und eine Steuereinrichtung (32) zur Selektion einer der Filtereinrichtungen ansprechend auf die zusätzlichen Daten zur Bestimmung, welche der Filtereinrichtungen zu verwenden ist, um die Videokomponente des empfangenen Signals für den betreffenden Bereich des Bildes, das darzustellen ist, zu verarbeiten.

11. Empfänger nach Anspruch 10, in welchem die Filtereinrichtung (20) auf Bildbasis und die Filtereinrichtung (22) auf Zeilenbasis jeweils ein Kammfilter umfassen.

12. Empfänger nach einem der Ansprüche 7 bis 11, in welchem die Videoverarbeitungsschaltung mehrere Bildspeicher (42), die jeweils eines mehrerer Bilder speichern und eine Phasenschiebeeinrichtung (48) aufweisen, um die Phase der in ihnen gespeicherten Bildinhalte zu schieben, aufweist, in welchem die Einrichtung zum Zuführen der abgetrennten Information eine Bewegungskompensations- und Phasensteuereinrichtung (46) aufweist, die dazu ausgelegt ist, die Phasenschiebeeinrichtung eines Bildspeichers dazu zu veranlassen, den darin gespeicherten Bildinhalt entsprechend dem Grad der Bewegung jedes solchen Bereichs des Bildes, der durch die Datenelemente von zusätzlichen auf diesen Bereich bezogenen Daten repräsentiert wird, zu verschieben.

13. Empfänger nach Anspruch 8, in welchem die Einrichtung zum Demodulieren eines empfangenen Fernsehsignals einen ersten und zweiten Demodulator (62, 64) enthält, wobei der zweite Demodulator (64) ein mit ihm verknüpftes Trennfilter auf Zeilenbasis aufweist, um die Leuchtdichte- und Chrominanzkomponenten des empfangenen Signals vor der Demodulation abzutrennen, in welchem die Videoverarbeitungsschaltung eine erste und zweite Bildspeichereinrichtung (66, 68) enthält, die jeweils mit der ersten bzw. zweiten Demodulatoreinrichtung verknüpft sind, die Einrichtung zum Zuführen der abgetrennten Information eine Bewegungskompensationseinrichtung (80) umfaßt, die ausgelegt ist, um den Inhalt der zweiten Bildspeichereinrichtung in Abhängigkeit von den zusätzlichen Datenelementen zu modifizieren, die für den betreffenden Bereich des darzustellenden Bildes empfangen worden sind, und einen Selektor (74) aufweist, der zwischen der durch die erste Demodulatoreinrichtung demodulierten Videokomponente und der durch die zweite Demodulatoreinrichtung demodulierten Videokomponente selektiert.

14. Empfänger nach Anspruch 9, in welchem die Videoverarbeitungsschaltung einen Analog/Digital-Umsetzer (104), einen Speicher (106) zum Speichern von digitalen Videokomponenten, einen Interpolator (108) zur Aufwärtsumsetzung einer Videokomponente auf eine höhere Zeilen- und/oder Teilbildrate zur Darstellung, wobei der Interpolator die umgesetzte Videokomponente in Abhängigkeit von betreffenden Zusatzdaten, die sich auf den Bereich des Bildes beziehen, der der Interpolationseinrichtung zugeführt wird, als einen stationären oder sich bewegenden Bereich interpoliert, und einen Digital/Analog-Umsetzer (110) aufweist, der die aufwärtskonvertierte Videokomponente zur Darstellung in ein analoges Signal umsetzt.

15. Verfahren zum Übertragen eines Fernsehsignals, aufweisend die Schritte der Erzeugung eines Videosignals, der Erzeugung eines digitalen Hilfssignals aus dem Videosignal, der Einfügung des digitalen Hilfssignals in das Austastintervall des Videosignals, **dadurch gekennzeichnet**, daß das erzeugte digitale Hilfssignal mehrere Elemente von Daten enthält, die jeweils bildabhängige Information betreffend angenommener Bewegung eines Bildes von einem betreffenden, jeweiligen Bereich des Bildes, das vom Videosignal übertragen wird, repräsentieren.

## Revendications

1. Signal classique de télévision, modifié en ce que l'intervalle vertical de suppression inclut une série d'éléments de données additionnelles, caractérisé en ce que chaque élément de donnée représente un information, dépendant de la représentation, concernant un mouvement supposé d'une image à partir d'une zone respective liée de la représentation en cours de transmission.

2. Signal selon la revendication 1, dans lequel l'information dépendant de la représentation indique que l'image de la zone de représentation est stationnaire, est mobile selon un ou plusieurs vecteurs prédéterminés, ou est mobile d'une autre manière.

3. Signal selon la revendication 2, dans lequel l'intervalle de suppression de trame contient aussi une donnée définissant le ou les vecteurs prédéterminés.

4. Signal selon la revendication 2 ou 3, dans lequel le ou les vecteurs prédéterminés sont définis différemment pour des zones différentes de la représentation.

5. Signal selon l'une quelconque des revendications précédentes, dans lequel il existe au moins 1000 desdites zones dans chaque représentation.

6. Emetteur de diffusion de télévision à base de PAL , de NTSC, de SECAM incluant un moyen de réception d'un signal vidéo, un moyen de génération, à partir du signal vidéo, d'un signal numérique d'assistance comprenant une série d'éléments de données, et un moyen d'insertion du signal numérique d'assistance dans l'intervalle de suppression de trame du signal vidéo, caractérisé en ce que chaque élément de donnée engendré représente une information, dépendant de la représentation, concernant un mouvement supposé d'une image depuis une zone respective liée de la représentation portée par le signal vidéo.

7. Récepteur de diffusion de télévision à base de PAL , de NTSC, de SECAM ou de MAC incluant un moyen de réception et de démodulation (26; 62, 64) d'un signal vidéo reçu, un circuit (66, 68, 80; 104, 106, 108) de traitement vidéo pour traiter la composante vidéo du signal reçu pour l'appliquer à l'affichage du récepteur, un moyen séparateur pour séparer du signal une information additionnelle portée dans l'intervalle vertical de suppression du signal vidéo, et un moyen (32) d'application, au circuit de traitement vidéo, de l'information séparée afin d'améliorer la qualité de l'affichage, caractérisé en ce que l'information additionnelle comprend une série d'éléments de données additionnelles représentant chacun une information, dépendant de la représentation, concernant un mouvement supposé d'une image à partir d'une zone respective liée de la représentation en cours de transmission.

8. Récepteur selon la revendication 7, dans lequel la donnée additionnelle commande la nature du décodage du signal vidéo.

9. Récepteur selon la revendication 7, dans lequel la donnée additionnelle contient une information concernant un mouvement supposé d'une image de la zone de représentation liée à l'élément de donnée et est utilisée pour commander la nature d'interpolation utilisée dans une conversion élévatrice du signal à un standard plus élevé de ligne et/ou de trame pour l'affichage.

10. Récepteur selon la revendication 8 et comprenant de plus un moyen (20) de filtre à base de représentation , un moyen (22) de filtre à base de ligne, et un moyen de commande (32) pour choisir l'un desdits moyens de filtre en réponse à la donnée additionnelle pour déterminer celui desdits moyens de filtre qui doit être utilisé pour le traitement de la composante vidéo du signal reçu pour la zone liée de la représentation à afficher.

11. Récepteur selon la revendication 10, dans lequel le moyen (20) de filtre à base de représentation et le moyen (22) de filtre à base de ligne comprennent un chacun un filtre en peigne.

12. Récepteur selon l'une quelconque des revendications 7 à 11, dans lequel le circuit de traitement vidéo comprend une série de mémoires (42) de représentation mémorisant chacune une des représentations d'une série et comprenant un moyen (48) de déphasage pour déphaser le contenu de la représentation qui y est mémorisée, le moyen d'application de l'information séparée comprenant un moyen (46) de compensation de mouvement et de commande de phase agencé pour amener le moyen de déphasage d'une mémoire de représentation à déphaser le contenu de la représentation qui s'y trouve conformément au degré de mouvement de chacune desdites zones de la représentation, représenté par les éléments de données de la donnée additionnelle liée à ladite zone.

13. Récepteur selon la revendication 8, dans lequel le moyen de démodulation d'un signal de télévision reçu comprend un premier et un deuxième démodulateurs (62, 64), le deuxième démodulateur (64) comprenant un filtre de séparation à base de ligne qui lui associé afin de séparer avant la démodulation les composantes de luminance et de chrominance du signal reçu, dans lequel le circuit de traitement vidéo inclut un premier et un deuxième moyens de mémoire (66, 68) associés respectivement au premier et au deuxième moyens démodulateurs, le moyen d'application de l'information séparée comprenant un moyen (80) de compensation de mouvement agencé pour modifier le contenu de la deuxième mémoire de représentation en fonction des éléments additionnels de données reçus pour la zone liée de la représentation à afficher, et un sélecteur (74) pour choisir entre la composante vidéo démodulée par le premier moyen démodulateur et la composante vidéo démodulée par le deuxième moyen démodulateur.

14. Récepteur selon la revendication 9, dans lequel le circuit de traitement vidéo comprend un convertisseur analogique à numérique (104), une mémoire (106) prévue pour mémoriser des composantes numériques vidéo, un interpolateur (108) pour une conversion élévatrice d'une composante vidéo à une fréquence de ligne et/ou de trame plus élevée en vue de l'affichage, l'interpolateur interpolant la composante vidéo convertie en tant que zone stationnaire ou mobile en fonction de la donnée additionnelle liée à la zone de la représentation fournie au moyen d'interpolation, et un convertisseur numérique à analogique (110) pour convertir la composante vidéo, après une conversion élévatrice, en un signal analogique à afficher.

15. Procédé d'émission d'un signal de télévision, comprenant les étapes consistant à engendrer un signal vidéo, engendrer à partir du signal vidéo un signal numérique d'assistance, insérer dans l'intervalle de suppression de trame du signal vidéo le signal numérique d'assistance, caractérisé en ce que le signal numérique d'assistance engendré comprend une série d'éléments de données, représentant chacun une information, dépendant de la représentation, concernant un mouvement supposé d'une image depuis une zone respective liée de la représentation portée par le signal vidéo.

a) START OF FIELD 1

b) START OF FIELD 2

*FIG.1*

EP 0 273 967 B1

a) START OF FIELD 1

b) START OF FIELD 2

*FIG 2*

FIG.3

FIG.4

FIG.5

FIG. 6

EP 0 273 967 B1